# EUROPEAN PATENT APPLICATION

(11) **EP 2 602 440 A2**
(43) Date of publication of application: **12.06.2013**
(21) Application number: 12195389.7
(22) Date of filing: 04.12.2012
(51) Int. Cl.: F01D 25/16, F16C 27/04

(54) **Bearing arrangement**

(30) Priority: 09.12.2011 GB 201121162
(71) Applicant: Rolls-Royce plc, London SW1E 6AT (GB)
(72) Inventor: Siniawski, Richard Andrew, Derby, DE22 1JU (GB)
(74) Representative: Hill, Matthew Ross

(57) **Abstract**

A bearing arrangement 2 comprising an outer race 10, a shaft 4 arranged to rotate with respect to the outer race 10 thereby defining an axis of rotation 8 of the shaft 4. The shaft 4 and the outer race 10 are arranged to define a region of overlap between the shaft 4 and the outer race 10 along the axis of rotation. An inner race 12 is disposed between the outer race 10 and the shaft 4 in the region of overlap and coupled for rotation with the shaft 4, the inner race 12 and the shaft 4 defining an annular reservoir 40 between them for accommodating radial expansion of the shaft 4 or radial displacement of the shaft 4 with respect to the axis of rotation 8.

## Description

This invention relates to a bearing arrangement.

Roller bearings are often used to support driveshafts in turbine engines. Typically, each roller bearing comprises an inner race arranged to rotate with the driveshaft, and an outer race fixed to the main body of the engine. Roller elements are disposed between the inner and outer races to allow rotation of the races with respect to each other.

In use, the driveshaft is exposed to elevated temperatures which heat the driveshaft and cause it to expand radially. The temperature distribution along the shaft is often non-uniform which causes different amounts of radial expansion along its length. For example, a driveshaft which is attached at one end to a turbine disc, and is supported by a bearing cooled by oil has a temperature gradient which decreases gradually from the end of the shaft attached to the turbine disc towards the end of the shaft supported by the bearing. The temperature variation creates a corresponding decrease in the diameter of shaft from the hot end of the shaft towards the cold end. This phenomenon is known as coning.

Coning can be particularly problematic when it occurs in the vicinity of the bearings since it can lead to uneven loading across the bearing. In particular, it can increase edge loading of the bearing races. This is undesirable because it creates uneven stress distributions across the bearing which can reduce the operational life of the bearings. Furthermore, where bearings are preloaded, for instance to minimise skidding of lightly loaded rolling elements, the problem is exacerbated. Coning can also occur in the inner and outer races of the bearing.

There is therefore a need for a bearing arrangement which alleviates the impact of coning.

According to a first aspect of the invention there is provided a bearing arrangement comprising a stationary component, a rotary component arranged to rotate with respect to the stationary component thereby defining an axis of rotation of the rotary component, the rotary component and the stationary component being arranged to define a region of overlap between the rotary component and the stationary component along the axis of rotation; and an intermediate component disposed between the stationary component and the rotary component in the region of overlap and coupled for rotation with the rotary component, the intermediate component and the rotary component defining an annular reservoir between them for accommodating radial expansion of the rotary component or radial displacement of the rotary component with respect to the axis of rotation. The term "stationary" means does not rotate about the axis of rotation when in use. The stationary component is therefore a component which may form part of a supporting structure such as a bearing housing with respect to which the rotary component rotates.

The stationary component may define a bearing axis, wherein the intermediate component has an axis of rotation which is arranged to extend parallel with the bearing axis, and the annular reservoir is arranged to accommodate radial expansion or radial displacement of the rotary component such that the axis of rotation of the intermediate component remains parallel with the bearing axis during use.

The intermediate component and the rotary component may be supported for rotation by the stationary component.

The annular reservoir may be filled with a fluid. The fluid may provide a film about the rotary component by which the rotary component is supported. The depth of the film may vary to accommodate the radial expansion or the radial displacement of the rotary component. The amount of fluid in the reservoir may be varied to adjust the depth of the film. The fluid may be a liquid. The fluid may be a pressurised fluid.

The stationary component may be disposed radially outwardly of the rotary component with respect to the axis of rotation.

The stationary component may be an outer race and the intermediate component may be an inner race, wherein rolling elements are disposed between the outer race and the inner race.

The rotary component may be a shaft supported for rotation by the inner race.

The stationary component may be disposed between a second stationary component and the rotary component, wherein the stationary component is coupled to the second stationary component to prevent rotation of the stationary component with respect to the second stationary component, the stationary component and the second stationary component defining a second annular reservoir between them for accommodating radial expansion of the stationary component or radial displacement of the stationary component with respect to the axis of rotation.

The second stationary component may be disposed radially outwardly of the stationary component with respect to the axis of rotation.

The second stationary component may be a hub structure for supporting the stationary, intermediate and rotary components. The second annular reservoir may be filled with a fluid.

According to a second aspect of the invention there is provided a turbine comprising a bearing arrangement according to the first aspect of the invention wherein the rotary component is a driveshaft of the turbine.

According to a third aspect of the invention there is provided an engine comprising a bearing arrangement in accordance with the first aspect of the invention, the engine having an engine axis, wherein the rotary component is a driveshaft of the engine, the intermediate component has an axis of rotation which is arranged to extend parallel with the engine axis, and the annular reservoir is arranged to accommodate radial expansion or radial displacement of the rotary component such that the axis of rotation of the intermediate component remains parallel with the engine axis during use.

The stationary component may be a first race and the intermediate component may be a second race, wherein rolling elements are disposed between the first race and the second race.

For a better understanding of the present invention, and to show more clearly how it may be carried into effect, reference will now be made, by way of example, to the accompanying drawings, in which:-
Figure 1 is sectional view of a bearing arrangement;
Figure 2 is a sectional view of the bearing arrangement of Figure 1 in use; and
Figure 3 is a sectional view of a variant of a bearing arrangement.

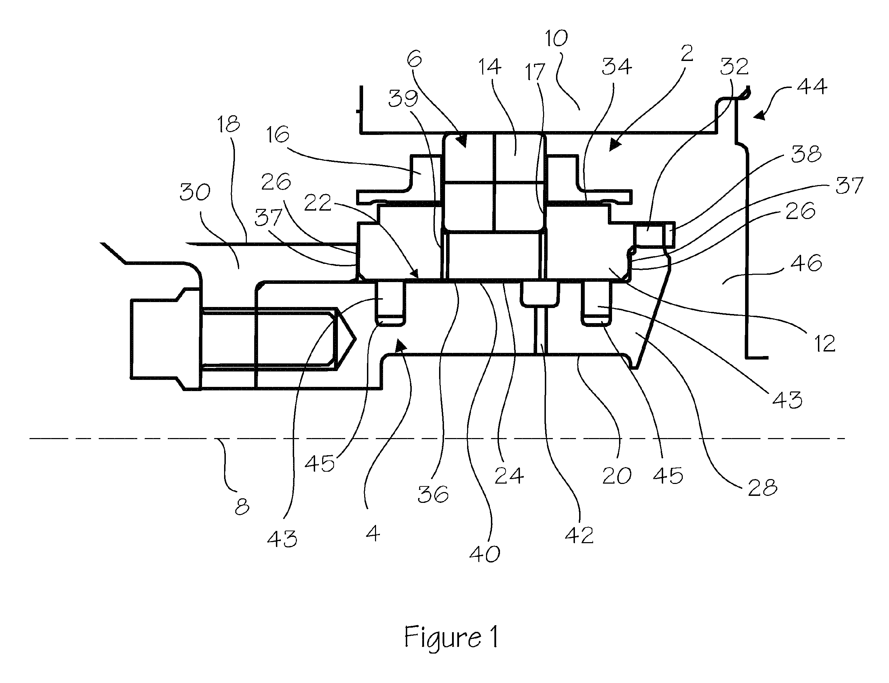

Figure 1 shows a stub-shaft assembly 2 comprising a shaft 4, for example a main driveshaft of a gas turbine, supported by a roller bearing 6. The shaft 4 defines a rotational axis 8 about which the shaft 4 rotates. The bearing 6 comprises an outer race 10 and an inner race 12, between which rollers 14 are disposed. The inner and outer races 10, 12 are annular. The inner and outer races 10, 12 may each have cylindrical cross-section or may be lobed, for example the outer race 10 shown in Figure 1 may be a tri-lobed ring. The rollers 14 are held for rotation by a cage 16 and by a groove 17 in the radially outer surface of the inner race 12 which restricts axial displacement of the rollers 14.

The shaft 4 is hollow and has a radially outer surface 18 and a radially inner surface 20. The shaft 4 comprises a recess 22 formed in the outer surface of the shaft 4 towards an end of the shaft 4. The recess 22 extends circumferentially about the entire shaft 4. The recess 22 has a bottom surface 24 which extends parallel to the rotational axis 8 and opposing side surfaces 26 that are perpendicular to the rotational axis 8. In the embodiments shown, the recess 22 is formed by an end piece 28 bolted onto a main portion 30 of the shaft 4. The width of the recess 22 is defined in the direction of the rotational axis 8. Anti-rotation dogs 32 are disposed at the end of the shaft 4 and adjacent the recess 22. The anti-rotation dogs 32 extend radially outwardly from the shaft 4.

The inner race 12 has a radially outer surface 34 and a radially inner surface 36. The width of the inner race 12 corresponds to the width of recess 22. The inner race 12 is disposed in the recess 22 such that the radially inner surface 36 of the inner race 12 is parallel with the bottom surface 24 of the recess 22. The inner race 12 defines end gaps 37 between the sides of the inner race 12 and the side surfaces 26 of the recess 22. The end gaps 37 provide leakage paths for oil. The end gaps 37 may be formed to tight tolerances in order to provide a predetermined amount of leakage flow during use. Passages 39 are also provided through the inner race 12 for the supply of oil to the rollers 14.

The inner race 12 has slots 38 in one side of the race 12 for receiving the anti-rotation dogs 32 in order to couple the inner race 12 for rotation with the shaft 4. The slots 38 allow the anti-rotation dogs 32 to move radially with respect to the rotational axis 8. The shaft 4 is thus able to move in a radial direction with respect to the inner race 12.

The radially inner surface 36 of the inner race 12 and the bottom surface 24 and side surfaces 26 of the recess 22 define an annular reservoir 40 between the inner race 12 and the shaft 4. A conduit 42 extends through the wall of the shaft 4, from the inner surface 20 of the shaft 4 to the bottom surface 24 of the recess 22. The conduit 42 provides communication between the interior of the shaft 4 and the reservoir 40. Two circumferential recesses 45 are provided in the bottom surface 24 of the recess 22. The circumferential recesses 45 are disposed on opposing sides of the conduit 42 with respect to the axial direction of the shaft 4. Respective sealing rings 43, such as piston rings, are disposed within the circumferential recesses 45 and seal against the radially inner surface 36 of the inner race 12.

The outer race 10 is supported by a housing 44 (shown in part only). The housing 44 and the outer race 10 define an oil chamber 46 about the end of the shaft 4 and the inner race 12, roller elements 14 and cage 16.

In use, oil is supplied under pressure to the oil chamber 46 so that the end of the shaft 4, including the radially inner and outer surfaces 18, 20, inner race 12, rollers 14 and cage 16 within the chamber 46 are washed in oil, but not completely immersed. Oil flows through the conduit 42 to flood the reservoir 40. The sealing rings 43 restrict flow from the reservoir 40 through the end gaps 37. The shaft 4 is therefore supported by a film of oil between the bottom surface 24 of the recess 22 and the radially inner surface 36 of the inner race 12. The load transmitted by the shaft 4 on the inner race 12 is evenly distributed by the oil.

As the temperature of the shaft 4 increases, it expands radially. The radial expansion can be accommodated by displacement of the oil within the reservoir 40. The radial expansion causes a reduction in the volume of the reservoir 40 and this can be accommodated by expulsion of oil from the reservoir 40 past the sealing rings 43 and through the end gaps 37 into the oil chamber 46. The sealing rings 43 may be arranged to allow expulsion of oil only when the pressure within the reservoir 40 is not less than a predetermined pressure. The predetermined pressure may, for example, correspond to a particular reservoir geometry or loading condition of the shaft 4. Expansion of the shaft 4 thus reduces the depth of the film of oil supporting the shaft 4 in the region of the expansion.

Where a temperature variation along the portion of shaft 4 supported by the oil causes a variation in the amount of radial expansion along the shaft 4, the difference in expansion can be accommodated by redistribution or expulsion of the oil from the reservoir 40. The shaft 4 remains supported by the redistributed or remaining oil so that the load transmitted by the shaft 4 through the inner race 12 remains evenly distributed.

It will be appreciated that rotation of the shaft 4 causes rotation of the inner race 12 and hence rotation of the reservoir 40. Skin friction between the oil and the inner race 12 and the shaft 4 will therefore cause the oil to rotate within the reservoir 40. This can generate a centrifugal effect within the reservoir 40 thereby increasing the pressure of the oil in the region of the reservoir 40 adjacent the inner race 12.

The reservoir 40 may also accommodate displacement of the shaft 4 with respect to the inner race 12. The oil in the reservoir 40 may therefore act to damp oscillations of the shaft 4, for example, oscillations caused by vibration of the shaft 4.

Oil may be fed by under track jetting or through a pressurised system. The reservoir 40 may be connected to the main oil chamber 46, as described above. Alternatively, the reservoir 40 may be connected to an independent oil feed system which may comprise an independent pressure regulator.

The outer race 10 abuts a radially outward surface of the housing 44 (not shown) and thus provides circumferential support of the outer race 10 and prevents deformation of the outer race 10 when loaded.

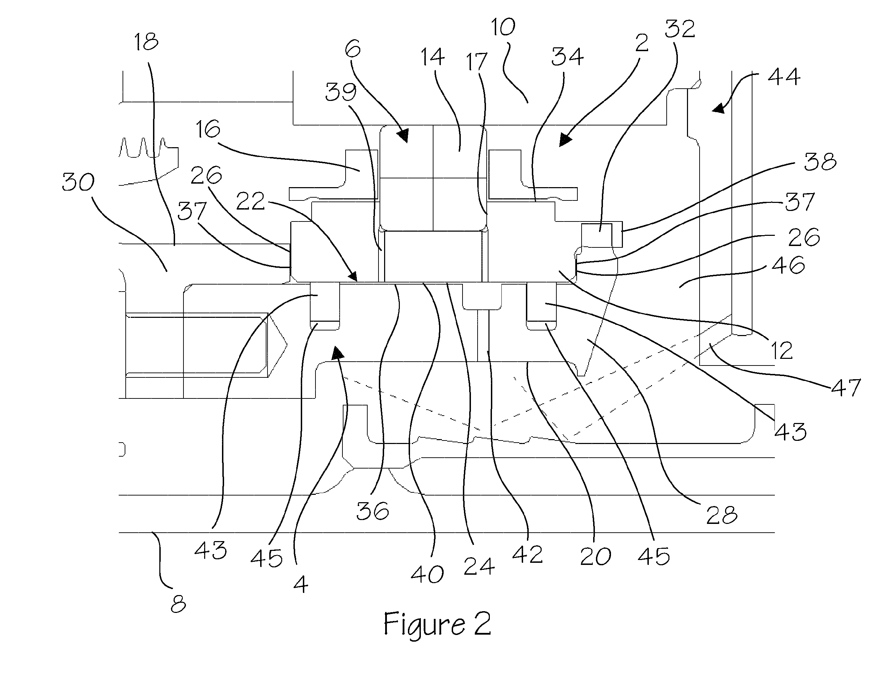

Figure 2 shows a variant of the stub-shaft assembly shown in Figure 1, in which the oil is jetted under pressure from a nozzle 47 in the casing 44 in the general direction of the conduit 42.

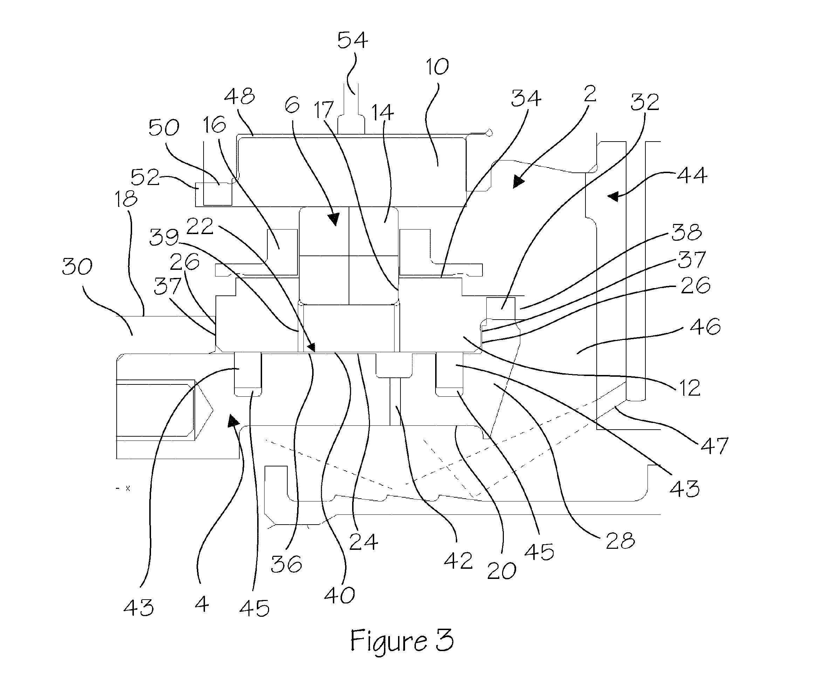

Figure 3 shows a similar stub-shaft assembly 2 and bearing 6 arrangement in which a second reservoir 48 is provided between the outer race 10 and the housing 44. The outer race 10 is coupled to the housing 44 by anti-rotation dogs 50 provided on the casing 44 which engage with slots 52 provided on the outer race 10 to prevent rotation of the outer race with respect to the housing 44. The second reservoir 48 is static with respect to the housing 44 during use.

The second reservoir 48 is supplied with oil via a second conduit 54 through the housing 44. The oil in the second reservoir 48 supports the outer race 10. The bearing 6 is therefore supported by a second film of oil between the bearing 6 and the housing 44. The second film of oil accommodates coning of the components of the stub-shaft assembly 2 and the bearing 6, in particular coning of the outer race 10 of the bearing 6. Consequently, in use, the rollers 14 and the inner and outer races 10, 12 remain parallel with the rotational axis 8 when coning occurs. In addition, the second film of oil allows for radial displacement of the stub-shaft assembly 2 and the bearing with respect to the rotational axis 8. The shaft 4 therefore remains located when the stub-shaft assembly 2 runs out of balance or coning occurs. Consequently, edge loading on the bearing races 10, 12 is reduced, or avoided entirely.

It will be appreciated that the arrangement of the slots 38, 52 and the anti-rotation dogs 32, 50 could be reversed so that the anti-rotation dogs are provided on the inner and outer races 12 and the corresponding slots are provided on the shaft 4 and housing 44 respectively. It will be further appreciated that other means suitable for rotatably securing the inner race 12 with the shaft 4 or the outer race 10 with the housing 44 may be used.

## Claims

1. A bearing arrangement comprising:
a stationary component;
a rotary component arranged to rotate with respect to the stationary component thereby defining an axis of rotation of the rotary component, the rotary component and the stationary component being arranged to define a region of overlap between the rotary component and the stationary component along the axis of rotation; and
an intermediate component disposed between the stationary component and the rotary component in the region of overlap and coupled for rotation with the rotary component, the intermediate component and the rotary component defining an annular reservoir between them for accommodating radial expansion of the rotary component or radial displacement of the rotary component with respect to the axis of rotation.

2. A bearing arrangement as claimed in claim 1, wherein the stationary component defines a bearing axis, the intermediate component having an axis of rotation which is arranged to extend parallel with the bearing axis, and the annular reservoir being arranged to accommodate radial expansion or radial displacement of the rotary component such that the axis of rotation of the intermediate component remains parallel with the bearing axis during use.

3. A bearing arrangement as claimed in claim 1 or 2, wherein the intermediate component and the rotary component are supported for rotation by the stationary component.

4. A bearing arrangement as claimed in any one of claims 1 to 3, wherein the annular reservoir is filled with a fluid.

5. A bearing arrangement as claimed in claim 4, wherein:
the fluid provides a film about the rotary component by which the rotary component is supported, wherein, optionally
the depth of the film varies to accommodate the radial expansion or the radial displacement of the rotary component, wherein, optionally the amount of fluid in the reservoir is varied to adjust the depth of the film.

6. A bearing arrangement as claimed in any one of claims 4 or claim 5, wherein:
the fluid is a liquid; and/or
the fluid is a pressurised fluid.

7. A bearing arrangement as claimed in any one of the preceding claims, wherein the stationary component is disposed radially outwardly of the rotary component with respect to the axis of rotation.

8. A bearing arrangement as claimed in claim 7, wherein:
the stationary component is an outer race and the intermediate component is an inner race, wherein rolling elements are disposed between the outer race and the inner race, wherein, optionally
the rotary component is a shaft supported for rotation by the inner race.

9. A bearing arrangement as claimed in any one of the preceding claims, wherein the stationary component is disposed between a second stationary component and the rotary component, the stationary component being coupled to the second stationary component to prevent rotation of the stationary component with respect to the second stationary component, the stationary component and the second stationary component defining a second annular reservoir between them for accommodating radial expansion of the stationary component or radial displacement of the stationary component with respect to the axis of rotation.

10. A bearing arrangement as claimed in claim 9, wherein the second stationary component is disposed radially outwardly of the stationary component with respect to the axis of rotation.

11. A bearing arrangement as claimed in claim 9 or 10, wherein the second stationary component is a hub structure for supporting the stationary, intermediate and rotary components.

12. A bearing arrangement as claimed in any one of claims 9 to 11, wherein the second annular reservoir is filled with a fluid.

13. A turbine comprising a bearing arrangement as claimed in any one of the preceding claims, wherein the rotary component is a driveshaft of the turbine.

14. An engine comprising a bearing arrangement as claimed in any one of claims 1 to 12, the engine having an engine axis, wherein the rotary component is a driveshaft of the engine, the intermediate component has an axis of rotation which is arranged to extend parallel with the engine axis, and the annular reservoir is arranged to accommodate radial expansion or radial displacement of the rotary component such that the axis of rotation of the intermediate component remains parallel with the engine axis during use.

15. An engine as claimed in claim 14, wherein the stationary component is a first race and the intermediate component is a second race, and rolling elements are disposed between the first race and the second race.
